# EUROPÄISCHE PATENTSCHRIFT

(11) **EP 3 505 485 B1**
(45) Veröffentlichungstag und Bekanntmachung des Hinweises auf die Patenterteilung: **25.01.2023**
(21) Anmeldenummer: 18210615.3
(22) Anmeldetag: 06.12.2018
(51) Int. Cl.: B66F 9/075, B62D 51/02, B62D 1/187, B62D 1/184

(54) **FLURFÖRDERZEUG MIT EINEM FAHRERARBEITSPLATZ, INSBESONDERE FAHRERSTAND, UND EINEM ALS LENKRAD AUSGEBILDETEN BEDIENELEMENT**
INDUSTRIAL TRUCK WITH A DRIVER'S WORKPLACE, IN PARTICULAR A DRIVER'S STAND, AND AN OPERATING DEVICE IN THE FORM OF A STEERING WHEEL
CHARIOT DE MANUTENTION COMPORTANT UN POSTE DE TRAVAIL DE CONDUCTEUR, EN PARTICULIER UN POSTE DE CONDUITE ET UN ÉLÉMENT DE COMMANDE CONÇU SOUS LA FORME DE VOLANT

(30) Priorität: 21.12.2017 DE 102017130918; 26.02.2018 DE 102018104307
(43) Veröffentlichungstag der Anmeldung: 03.07.2019
(73) Patentinhaber: STILL S.p.A., 20020 Lainate (MI) (IT)
(72) Erfinder: AGOSTI, Stefano, 46047 Porto Mantovano (IT); MARIOTTI, Fabio, 42016 Guastalla RE (IT)
(74) Vertreter: Patentship Patentanwaltgesellschaft

(56) Entgegenhaltungen:
- EP-A1- 3 162 654
- EP-A2- 0 995 663
- DE-A1- 10 250 905
- DE-C1- 3 603 173

## Beschreibung

Die Erfindung betrifft ein Flurförderzeug mit einem Fahrerarbeitsplatz, insbesondere Fahrerstand mit einer Fahrerstandplattform, und einem als Lenkrad ausgebildeten Bedienelement, das mittels einer Verstelleinrichtung verstellbar an einem Antriebsteil des Flurförderzeugs angeordnet ist, wobei die Verstelleinrichtung einen Befestigungsflansch, an dem das Lenkrad angebaut ist, umfasst und als Zwangskulissenführung ausgebildet ist, die derart ausgeführt ist, dass der Befestigungsflansch bei einer vertikalen Verstellung zwangsweise in horizontaler Richtung verstellt wird und zwangsweise in der Neigung zur Horizontalen verstellt wird.

Ein gattungsgemäßes Flurförderzeug ist aus der DE 102 50 905 A1 bekannt, in der ein Flurförderzeug mit einem Fahrerarbeitsplatz und einem als Lenkrad ausgebildeten Bedienelement offenbart ist, das mittels einer Verstelleinrichtung verstellbar an einem Antriebsteil des Flurförderzeugs angeordnet ist. Die Verstelleinrichtung umfasst einen Befestigungsflansch, an dem das Lenkrad angebaut ist, und ist als Zwangskulissenführung ausgebildet, die derart ausgeführt ist, dass der Befestigungsflansch bei einer vertikalen Verstellung zwangsweise in horizontaler Richtung verstellt wird und zwangsweise in der Neigung zur Horizontalen verstellt wird.

Bei Flurförderzeugen mit einem Fahrerstand, die von einer auf der Fahrerstandplattform stehenden Bedienperson bedient werden und bei denen die stehende Bedienperson ein Lenkrad als Bedienelement bedient, ist es gewünscht, die Position des Lenkrades an die Größe der Bedienperson anzupassen, so dass eine auf der Fahrerstandplattform stehende Bedienpersonen von der 5. Perzentil Frau bis zum 95. Perzentil Mann in ergonomisch günstiger Weise das Lenkrad bedienen kann. Aufgrund der stehenden Bedienperson muss hierzu die Verstelleinrichtung einen großen Verstellbereich in vertikaler Richtung aufweisen, um das Lenkrad für eine ergonomische Bedienung an die Größe der Bedienperson anpassen zu können. Aufgrund der stehenden Bedienperson ist weiterhin gewünscht, den horizontalen Abstand des Lenkrades zur Position der Bedienperson auf der Fahrerstandplattform, wobei die Position der Bedienperson auf der Fahrerstandplattform unabhängig von der Größe der Bedienperson ist, da sich die Bedienperson beispielsweise mit dem Rücken an einer Anlehnhilfe anlehnen soll, und die Neigung des Lenkrades zu verändern, um das Lenkrad für eine ergonomische Bedienung an die Größe der Bedienperson anpassen zu können. Sofern bei einem derartigen Flurförderzeug das Lenkrad in vertikaler Richtung oberhalb eines Antriebsteils oder eines Batteriefachs des Antriebsteils angeordnet ist, besteht hierbei das Problem, bei geringem Bauraumbedarf und Einbauraumbedarf der Verstelleinrichtung in vertikaler Richtung den erforderlichen vertikalen Verstellbereich und die zusätzlichen Verstellmöglichkeiten in horizontaler Richtung und in der Neigung des Lenkrades zur Verfügung zu stellen.

Der vorliegenden Erfindung liegt die Aufgabe zugrunde, ein Flurförderzeug der eingangs genannten Gattung zur Verfügung zu stellen, das bei geringem Bauaufwand und Bauraumbedarf für die Verstelleinrichtung eine Anpassung des als Lenkrad ausgebildeten Bedienelements an die Größe der Bedienperson ermöglicht.

Diese Aufgabe wird erfindungsgemäß dadurch gelöst, dass der Fahrerarbeitsplatz ein Fahrerarbeitsplatz für eine stehende Bedienperson ist und die Verstelleinrichtung eine Lagerkonsole, die an dem Antriebsteil befestigt ist, eine Befestigungskonsole, die mit dem Befestigungsflansch versehen ist und die an der Lagerkonsole mittels einer Führung geführt ist, und eine Zwischenkonsole aufweist, die mit der Befestigungskonsole verbunden, insbesondere gelenkig verbunden, ist und die an der Lagerkonsole mittels einer Führung geführt ist. Mit einer als Zwangskulissenführung ausgebildeten Verstelleinrichtung, mit der bei einer vertikalen Verstellung des Befestigungsflansches, an dem das Lenkrad angebaut ist, der Befestigungsflansch zwangsweise in horizontaler Richtung und zwangsweise in der Neigung zur Horizontalen verstellt wird, werden bei geringem Bauaufwand, Bauraumbedarf und Einbauraumbedarf der Verstelleinrichtung die gewünschten Verstellmöglichkeiten des Lenkrades in vertikaler Richtung, in horizontaler Richtung und in der Neigung erzielt, um das Lenkrad an die Größe der auf der Fahrerstandplattform stehenden Bedienperson für eine ergonomische Bedienung des Lenkrades anpassen zu können. Mit der als Zwangskulissenführung ausgebildeten Verstelleinrichtung werden hierbei die drei Verstellmöglichkeiten (vertikale Höhe, horizontaler Abstand und Neigung des Befestigungsflansches) des Lenkrades bezogen zur Position der auf der Fahrerstandplattform stehenden Bedienperson, die unabhängig von der Größe der Bedienperson ist, gleichzeitig verändert, was sich vorteilhaft in Bezug auf einen geringen Bauraumbedarf, Einbauraumbedarf und geringen Bauaufwand der Verstelleinrichtung auswirkt.

Erfindungsgemäß weist die Verstelleinrichtung eine Lagerkonsole, die an dem Antriebsteil befestigt ist, eine Befestigungskonsole, die mit dem Befestigungsflansch versehen ist und die an der Lagerkonsole mittels einer Führung geführt ist, und eine Zwischenkonsole auf, die mit der Befestigungskonsole verbunden, insbesondere gelenkig verbunden, ist und die an der Lagerkonsole mittels einer Führung geführt ist. An der Befestigungskonsole ist somit an dem Befestigungsflansch das Lenkrad fest angebaut. Die Befestigungskonsole ist weiterhin an der Lagerkonsole mittels einer Führung geführt. Die Befestigungskonsole ist weiterhin mit der Zwischenkonsole gelenkig verbunden. Die Zwischenkonsole ist somit ebenfalls mit der Befestigungskonsole gelenkig verbunden und an der Lagerkonsole mittels einer Führung geführt. Die Lagerkonsole, die am Antriebsteil des Flurförderzeugs befestigt ist, ist somit einerseits über eine Führung mit der Zwischenkonsole und andererseits über eine Führung mit der Befestigungskonsole verbunden. Mit einer derartigen aus einer Lagerkonsole, einer Zwischenkonsole und einer Bedienkonsole bestehende Verstelleinrichtung, die über die entsprechenden Führungen und die gelenkige Verbindung in der genannten Weise verbunden sind, kann auf einfache Weise und bei geringem Bauraum- und Einbauraumbedarf eine Zwangskulissenführung erzielt werden, mit der bei einer vertikalen Verstellung des Befestigungsflansches der Befestigungsflansch zwangsweise und somit gleichzeitig in horizontaler Richtung und zwangsweise und somit gleichzeitig in der Neigung zur Horizontalen verstellt wird

Bevorzugt ist die Zwischenkonsole mit der Befestigungskonsole um eine horizontale Achse gelenkig verbunden.

Gemäß einer vorteilhaften Ausgestaltungsform der Erfindung weist die Befestigungskonsole eine langlochartige Führungsnut, insbesondere eine kreisbogenförmig gekrümmte Führungsnut, und die Lagerkonsole einen Führungszapfen auf, wobei der Führungszapfen in der Führungsnut der Befestigungskonsole angeordnet ist. Mit einer derartigen Führungsnut und einem in die Führungsnut eingreifenden Führungszapfen kann mit geringem Bauaufwand die Führung zwischen der Befestigungskonsole und der Lagerkonsole gebildet werden.

Gemäß einer vorteilhaften Ausgestaltungsform der Erfindung weist die Zwischenkonsole eine langlochartige Führungsnut, insbesondere eine kreisbogenförmig gekrümmte Führungsnut, auf und die Lagerkonsole einen weiteren Führungszapfen auf, der von dem Führungszapfen in vertikaler Richtung beabstandet ist, wobei der Führungszapfen und der weitere Führungszapfen in der Führungsnut der Zwischenkonsole angeordnet sind. Mit einer derartigen Führungsnut und zwei in die Führungsnut eingreifenden Führungszapfen kann mit geringem Bauaufwand die Führung zwischen der Zwischenkonsole und der Lagerkonsole gebildet werden.

Sofern die langlochartige Führungsnut der Befestigungskonsole und/oder die langlochartige Führungsnut der Zwischenkonsole kreisbogenförmig gekrümmt sind, ergeben sich Vorteil hinsichtlich eines geringen Bauraumbedarfs und Einbauraumbedarfs der Verstelleinrichtung in vertikaler Richtung.

Vorteilhafterweise ist der weitere Führungszapfen von dem Führungszapfen in horizontaler Richtung beabstandet. Es ergibt sich somit eine Anordnung, bei der der weitere Führungszapfen der Lagerkonsole von dem Führungszapfen der Lagerkonsole sowohl in vertikaler als auch in horizontaler Richtung beabstandet ist, wodurch sich Vorteile hinsichtlich eines geringen Bauraumbedarfs und Einbauraumbedarfs der Verstelleinrichtung in vertikaler Richtung ergeben.

Gemäß einer Weiterbildung der Erfindung ist die Verstelleinrichtung mit einer Federeinrichtung in eine Endstellung beaufschlagt, wobei die Federeinrichtung mit einem ersten Ende an dem Antriebsteil befestigt ist und mit einem zweiten Ende an der Zwischenkonsole befestigt ist. Hierdurch wird eine einfache manuelle Bedienung der Verstelleinrichtung durch die Bedienperson erzielt. Bevorzugt ist die Verstelleinrichtung von der Federeinrichtung in eine vertikal obere Endstellung beaufschlagt, so dass die Verstelleinrichtung von der Bedienperson durch Drücken nach vertikal unten in bequemer Weise in Richtung der vertikal unteren Endstellung verstellt werden kann.

Besondere Vorteile ergeben sich, wenn gemäß einer vorteilhaften Ausgestaltungsform der Erfindung der Führungszapfen mittels einer Lagerbuchse in der Führungsnut der Befestigungskonsole und in der Führungsnut der Zwischenkonsole angeordnet ist.

Von Vorteil ist hierbei weiterhin, wenn der weitere Führungszapfen mittels einer Lagerbuchse in der Führungsnut der Zwischenkonsole angeordnet ist.

Mit derartigen Lagerbuchsen können einerseits geringe Bedienkräfte für die Verstellung der Verstelleinrichtung erzielt werden und anderseits Spiel zwischen den Bauteilen der Verstelleinrichtung vermieden werden, so dass die Verstelleinrichtung einen robusten und steifen Aufbau aufweist.

Vorteilhafterweise ist die Zwischenkonsole zwischen der Lagerkonsole und der Befestigungskonsole angeordnet. Dies führt zu einer kompakten Bauweise mit geringem Bauraumbedarf und Einbauraumbedarf der Verstelleinrichtung.

Gemäß einer vorteilhaften Weiterbildung der Erfindung weist die Verstelleinrichtung eine Klemmeinrichtung auf, die eine Klemmung der Befestigungskonsole und der Zwischenkonsole an der Lagerkonsole ermöglicht. Mit einer derartigen Klemmeinrichtung kann die Verstelleinrichtung auf einfache Weise in der jeweiligen Verstellposition geklemmt werden.

Vorteilhafterweise ist die Klemmeinrichtung als Klemmverschraubung ausgebildet, die den Führungszapfen bildet. Mit einer Klemmverschraubung kann eine einfache Betätigung der Klemmeinrichtung durch die Bedienperson erzielt werden, beispielsweise durch Drehen einer als Klemmknopf ausgebildeten Klemmmutter der Klemmverschraubung. Sofern die Klemmverschraubung weiterhin den Führungszapfen bildet, auf dem die Zwischenkonsole und die Befestigungskonsole mit den jeweiligen Führungsnuten geführt ist, ergeben sich Vorteile hinsichtlich einer verringerten Anzahl von Bauelementen, was sich vorteilhaft auf den Bauraumbedarf und den Bauaufwand der Verstelleinrichtung auswirkt.

Bevorzugt umfasst die Klemmverschraubung eine Klemmmutter und eine an der Lagerkonsole verdrehgesicherte Klemmplatte, wobei die Befestigungskonsole, die Zwischenkonsole und die Lagerkonsole zwischen der Klemmmutter und der Klemmplatte angeordnet sind. Dies ermöglicht es auf einfache Weise, dass durch Betätigen der Klemmmutter die Befestigungskonsole, die Zwischenkonsole und die Lagerkonsole zwischen der Klemmmutter und der Klemmplatte verspannt werden können, um die Verstelleinrichtung zu klemmen.

Die Verstelleinrichtung weist vorteilhafterweise Weise eine vertikalen Verstellbereich im Bereich von 100mm bis 125mm, bevorzugt 110 mm, einen horizontalen Verstellbereich im Bereich von 10mm bis 60mm, bevorzugt 50 mm, und einen Neigungsverstellbereich im Bereich von 4° bis 8°, bevorzugt 6° , aufweist. Derartige Verstellbereiche ermöglichen bei einem Flurförderzeug, bei dem die Bedienperson auf einer Fahrerstandplattform steht und im Stehen das Lenkrad bedient, eine ergonomische Einstellung des Lenkrades für Größen von Bedienpersonen zwischen einer 5. Perzentil Frau und einem 95. Perzentil Mann.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Verstellvorrichtung eines Lenkrads in einer perspektivischen Darstellung,
- Figur 2: einen Ausschnitt der Figur 1 in einer vergrößerten Darstellung,
- Figur 3: die Figur 2 in einer anderen Ansicht,
- Figur 4: die erfindungsgemäße Verstelleinrichtung in einer perspektivischen Darstellung in der unteren vertikalen Endstellung,
- Figur 5: die Figur 4 in einer Seitenansicht,
- Figur 6: die Figur 5 in einer Ansicht gemäß Pfeil A der Figur 5,
- Figur 7: die Figur 4 in einer zweiten Seitenansicht,
- Figur 8: die Figur 7 in einer Ansicht gemäß Pfeil B der Figur 7,
- Figur 9: die Figur 5 in einer Ansicht gemäß Pfeil C der Figur 5,
- Figur 10: die erfindungsgemäße Verstelleinrichtung in einer perspektivischen Darstellung in der oberen vertikalen Endstellung,
- Figur 11: die Figur 10 in einer Seitenansicht,
- Figur 12: die Figur 10 in einer zweiten Seitenansicht,
- Figur 13: die Befestigungskonsole der erfindungsgemäßen Verstelleinrichtung in einer perspektivischen Darstellung und einer Seitenansicht,
- Figur 14: die Zwischenkonsole der erfindungsgemäßen Verstelleinrichtung in einer perspektivischen Darstellung und einer Seitenansicht,
- Figuren: 15 bis 18 weitere Einzelteile der erfindungsgemäßen Verstelleinrichtung und
- Figur 19: die Lagerkonsole der erfindungsgemäßen Verstelleinrichtung in einer perspektivischen Darstellung.

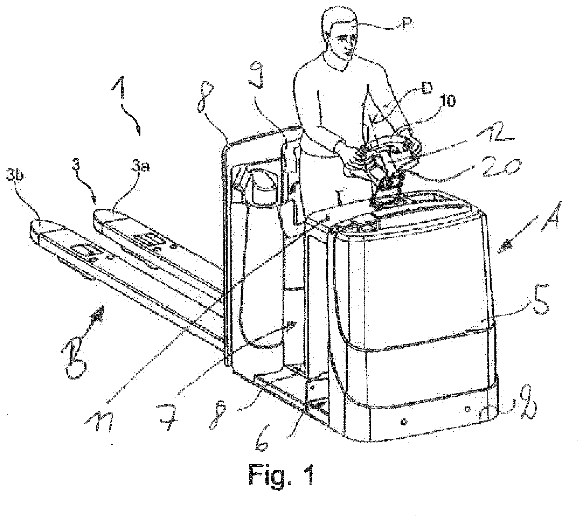

Die Figur 1 zeigt ein erfindungsgemäßes Flurförderzeug 1. Das Flurförderzeug 1 ist im dargestellten Ausführungsbeispiel als Kommissionierer oder Hubwagen ausgebildet.

Das Flurförderzeug 1 weist einen Antriebsteil A und einen relativ zum Antriebsteil A anhebbaren bzw. absenkbaren Lastteil B auf. Der Antriebsteil A weist als tragendes Bauteil einen Rahmen 2 auf. Der Lastteil B weist als tragendes Bauteil einen von zwei Lastgabeln 3a, 3b gebildeten Lastrahmen 3 auf. Die beiden Lastgabeln 3a, 3b sind in Fahrzeugquerrichtung voneinander beabstandet und die mittels eines Hubantriebs relativ zu dem Antriebsteil A anhebbar und absenkbar.

An dem vorderen Bereich des Antriebsteils A ist unter einer Haube 5 ein elektrisch angetriebenes und lenkbares Antriebsrad angeordnet, mit dem sich der Antriebsteil A auf einer Fahrbahn abstützt. Unter der Haube 5 sind an dem Rahmen 2 weitere Aggregate angeordnet, beispielsweise eine Leistungselektronikeinheit und ein elektrischer Hubmotor zum Antrieb einer Hydraulikpumpe, mittels der eine Hubvorrichtung zum Anheben und Absenken des Lastrahmens 3 relativ zum Rahmen 2 versorgbar ist.

In Längsrichtung des Flurförderzeugs 1 benachbart zur Haube 5 ist am Rahmen 2 ein Batteriefach 6 zur Aufnahme eines Batterieblocks ausgebildet, der ein elektrisches Antriebssystem des Flurförderzeugs 1 mit elektrischer Energie versorgt.

In Längsrichtung des Flurförderzeugs 1 benachbart zum Batteriefach 6 ist ein Fahrerarbeitsplatz 7 ausgebildet, der als Fahrerstand für eine stehende Bedienperson P ausgebildet ist und eine Fahrerstandplattform 8 umfasst, auf der die Bedienperson P steht.

Am hinteren Bereich des Rahmens 2 ist in Längsrichtung des Flurförderzeugs 1 benachbart zu dem Fahrerarbeitsplatz 7 ein vertikaler Rahmenabschnitt 8 angeordnet, in dem der anhebbare und absenkbare Lastrahmen 3 vertikal geführt ist. An dem vertikalen Rahmenabschnitt 8 kann eine Anlehnhilfe 9 für die stehende Bedienperson P angeordnet sein.

Zur Bedienung des Flurförderzeugs 1 ist ein Lenkrad 10 als Bedienelement vorgesehen, der im dargestellten Ausführungsbeispiel oberhalb des Antriebsteils 2, beispielsweise an einem das Batteriefach 6 abdeckenden Deckels 11 angeordnet ist.

Das Lenkrad 10 ist um eine Drehachse D drehbar an dem Flurförderzeug 1 angeordnet. Das Lenkrad 10 weist hierzu eine Lenkerkonsole 12 auf, mittels der das Lenkrad 10 um die Drehachse D drehbar an dem Flurförderzeugs 1 angeordnet ist.

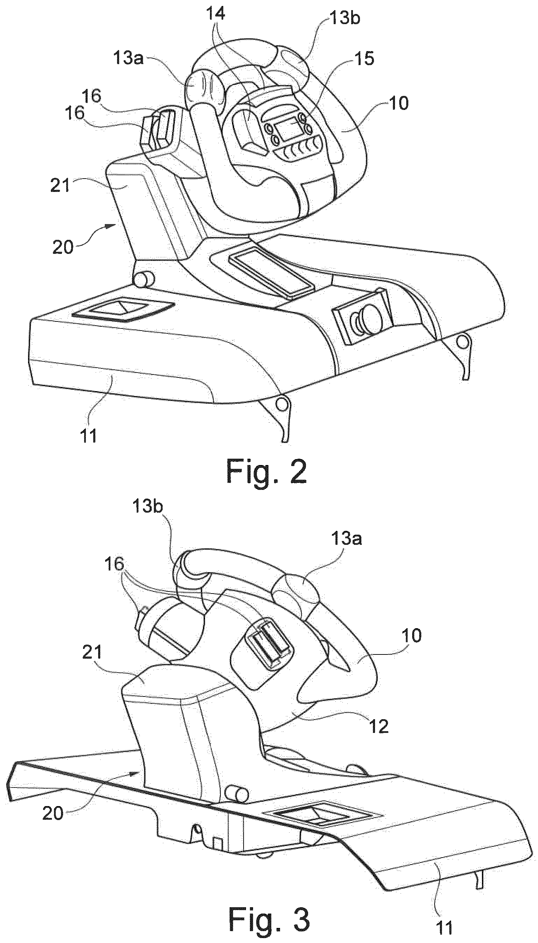

In den Figuren 2 und 3 ist das an dem Deckel 11 angeordnete Lenkrad 10 der Figur 1 in weiteren Darstellungen dargestellt. Das Lenkrad 10 ist mit Fahrschaltern 13a, 13b an einem Lenkkranz, Bedienelementen 14 und einem Display 15 versehen. Zusätzlich können an der Lenkerkonsole 12 weitere Bedienelemente 16 angeordnet sein.

Der Lenker 10 ist mittels einer Verstelleinrichtung 20 verstellbar an dem Deckel 11 und somit am Antriebsteil A des Flurförderzeugs 1 angeordnet. Die Verstelleinrichtung 20 ist in den Figuren 2 und 3 unterhalb einer Abdeckung 21 angeordnet.

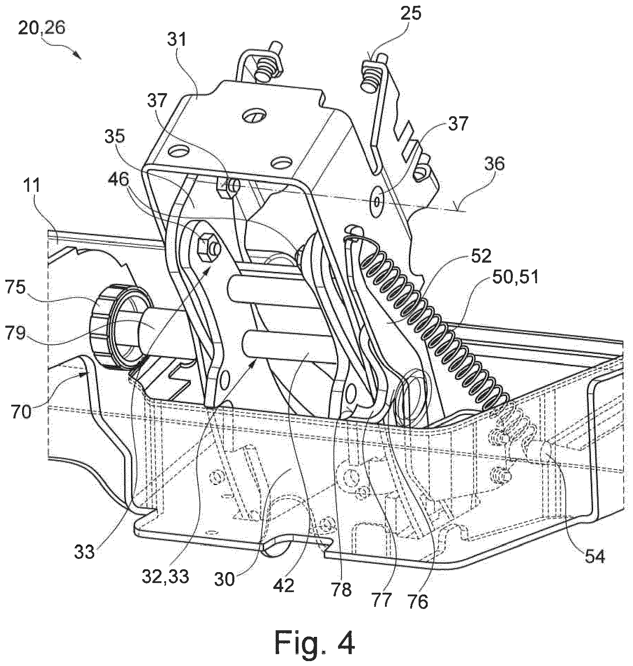

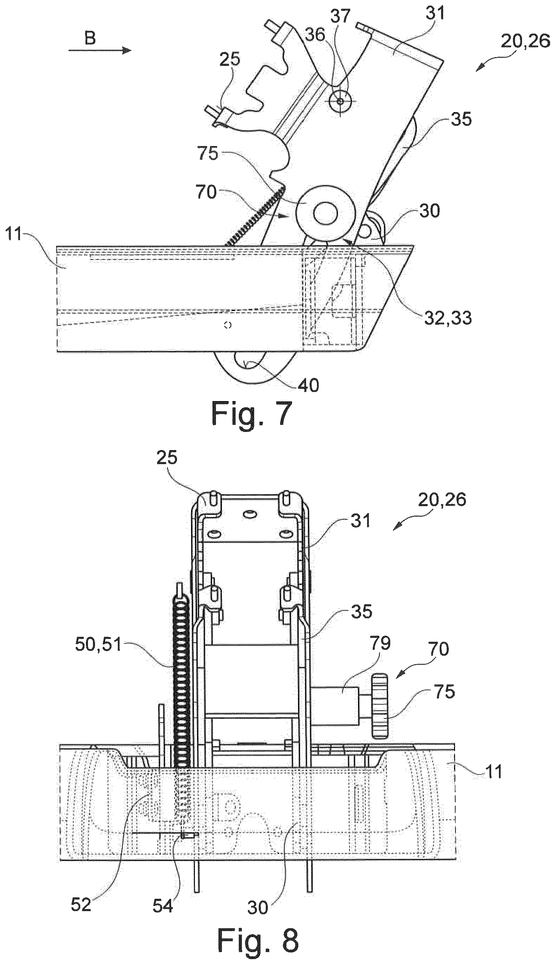

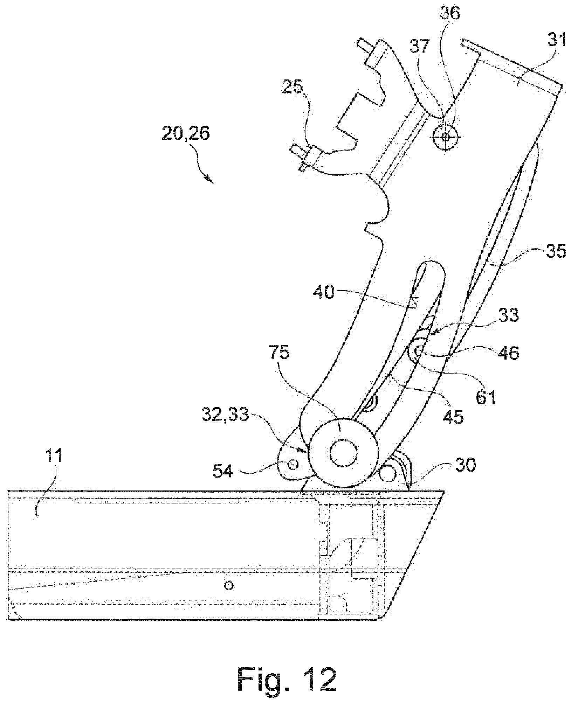

In den Figuren 4 bis 19 ist die erfindungsgemäße Verstelleinrichtung 20 näher dargestellt.

Die erfindungsgemäße Verstelleinrichtung 20 umfasst einen Befestigungsflansch 25, an dem das Lenkrad 10 mittels der Lenkerkonsole 12 angebaut ist. Die erfindungsgemäße Verstelleinrichtung 20 ist als als Zwangskulissenführung 26 ausgebildet, die derart ausgeführt ist, dass der Befestigungsflansch 25 bei einer vertikalen Verstellung V zwangsweise in horizontaler Richtung H verstellt wird und zwangsweise in der Neigung α zur Horizontalen verstellt wird.

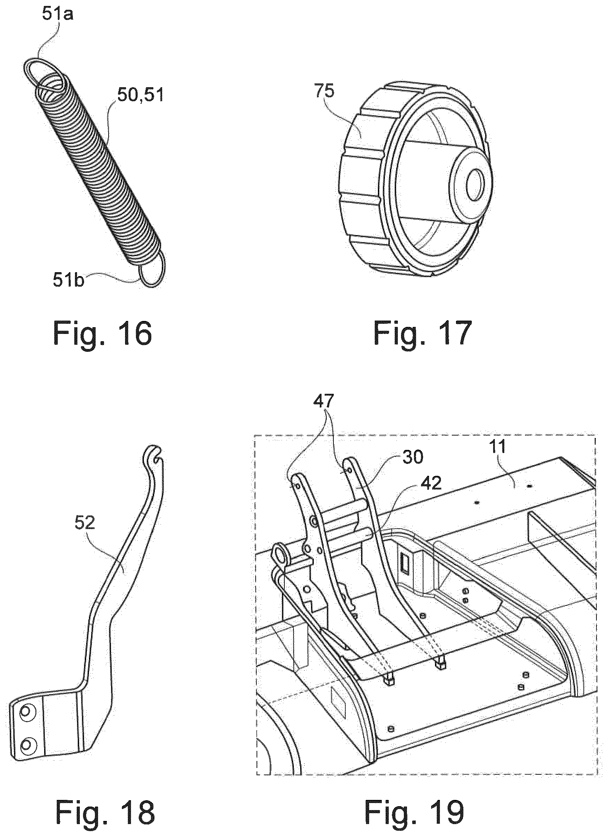

Die erfindungsgemäße Verstelleinrichtung 20 weist eine Lagerkonsole 30 auf, die - wie insbesondere aus der Figur 19 näher ersichtlich ist - an dem Antriebsteil A, im dargestellten Ausführungsbeispiel dem Deckel 11, befestigt ist. Die Lagerkonsole 30 kann hierzu mit dem Deckel 11 verschweißt sein.

Die erfindungsgemäße Verstelleinrichtung 20 weist weiterhin eine Befestigungskonsole 31 auf, die mit dem Befestigungsflansch 25 versehen ist und die an der Lagerkonsole 30 mittels einer Führung 32 geführt ist. Die erfindungsgemäße Verstelleinrichtung 20 weist weiterhin eine Zwischenkonsole 35 auf, die mit der Befestigungskonsole 31 verbunden ist, insbesondere gelenkig verbunden ist. Die Zwischenkonsole 35 ist weiterhin der Lagerkonsole 30 mittels einer Führung 33 geführt ist.

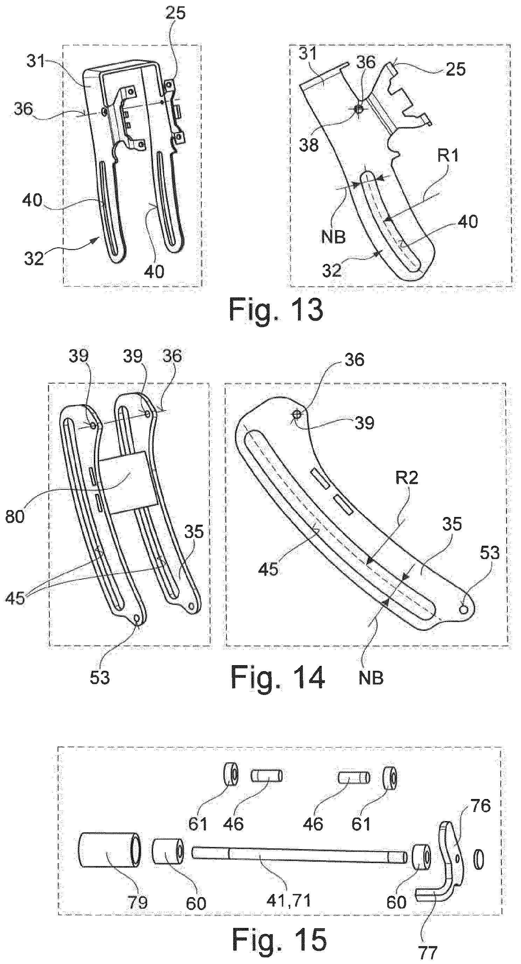

Die Zwischenkonsole 35 ist hierzu mit der Befestigungskonsole 31 um eine horizontale Achse 36 gelenkig verbunden ist. Die Achse 36 ist von Befestigungsschrauben 37 gebildet, die in Bohrungen 38 der Befestigungskonsole 31 (Figur 13) und Bohrungen 39 der Zwischenkonsole 35 (Figur 14) angeordnet sind.

Die Führung 32, mittels der die Befestigungskonsole 31 an der Lagerkonsole 30 geführt, besteht aus einer langlochartige Führungsnut 40 in der Befestigungskonsole 31 (Figur 13) und einem an der Lagerkonsole 30 angeordneter Führungszapfen 41 (Figur 15), wobei der Führungszapfen 41 in der Führungsnut 40 der Befestigungskonsole 31 angeordnet ist. Die Lagerkonsole 30 ist mit einer rohrförmigen Hülse 42 versehen, in der der Führungszapfen 41 angeordnet ist.

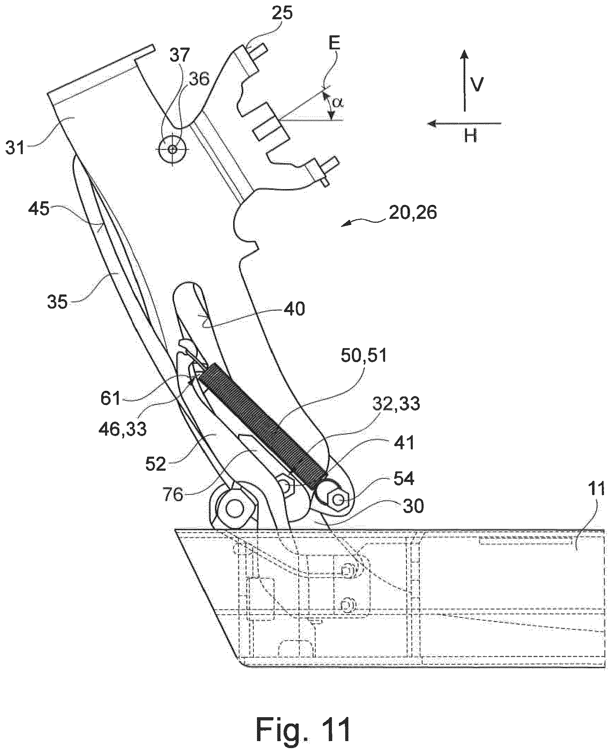

Die Führung 33, mittels der die Zwischenkonsole 35 an der Lagerkonsole 30 geführt ist, besteht aus einer langlochartige Führungsnut 45 in der Zwischenkonsole 35 (Figur 14), dem Führungszapfen 41 und einem weiteren an der Lagerkonsole 30 angeordneten Führungszapfen 46, der von dem Führungszapfen 41 in vertikaler Richtung V beabstandet ist, wie aus der Figur 11 ersichtlich ist. Der Führungszapfen 41 und der weitere Führungszapfen 46 sind hierbei in der Führungsnut 45 der Zwischenkonsole 35 angeordnet. Der Führungszapfen 46 ist von einem Bolzen gebildet (Figur 15), der in einer Bohrung 47 der Lagerkonsole 30 (Figur 19) befestigt ist.

Der weitere Führungszapfen 46 ist von dem Führungszapfen 41 weiterhin in horizontaler Richtung H beabstandet, wie aus der Figur 11 ersichtlich ist.

Die Verstelleinrichtung 20 ist mit einer Federeinrichtung 50 versehen, die die Verstelleinrichtung 20 in eine Endstellung beaufschlagt. In dem dargestellten Ausführungsbeispiel ist die Verstelleinrichtung 20 von der Federeinrichtung 50 in die vertikal obere Endstellung beaufschlagt. Die Federeinrichtung 50, die in der Figur 16 näher dargestellt ist, ist als Schraubenzugfeder 51 ausgebildet, die mit einem ersten Ende 51a an dem Antriebsteil A befestigt ist und mit einem zweiten Ende 51b an der Zwischenkonsole 35 befestigt ist. Zur Befestigung der Federeinrichtung 50 an dem Antriebsteil A ist ein Halter 52 (Figur 18) vorgesehen, an dem die Schraubenzugfeder 51 mit dem ersten Ende 51a befestigt ist und der an dem Antriebsteil A, im dargestellten Ausführungsbeispiel an dem Deckel 11, befestigt ist. Zur Befestigung der Federeinrichtung 50 an der Zwischenkonsole 35 ist die Zwischenkonsole 35 mit einer Bohrung 53 versehen (Figur 14), an der eine Schraube 54 (Figur 11) befestigt ist, die mit dem zweiten Ende 51b der Federeinrichtung 50 in Wirkverbindung steht.

Der Führungszapfen 41 ist mittels einer in der Figur 15 näher dargestellten Lagerbuchse 60 in der Führungsnut 40 der Befestigungskonsole 31 und in der Führungsnut 45 der Zwischenkonsole 35 angeordnet. Die Führungsnut 40 der Befestigungskonsole 31 und die Führungsnut 45 der Zwischenkonsole 35 weisen hierzu gleiche Nutbreiten NB auf.

Der weitere Führungszapfen 46 ist ebenfalls mittels einer Lagerbuchse 61 in der Führungsnut 45 der Zwischenkonsole 35 angeordnet.

Wie aus den Figuren 4, 6, 8 bis 10 ersichtlich ist, ist die Zwischenkonsole 35 in Fahrzeugquerrichtung zwischen der Lagerkonsole 30 und der Befestigungskonsole 31 angeordnet. Die Lagerkonsole 30 ist hierbei innerhalb der Zwischenkonsole 35 und die Zwischenkonsole 35 innerhalb der Befestigungskonsole 31 angeordnet.

Die Verstelleinrichtung 20 weist eine Klemmeinrichtung 70 auf, die eine Klemmung der Befestigungskonsole 31 und der Zwischenkonsole 35 an der Lagerkonsole 30 ermöglicht.

Die Klemmeinrichtung 70 ist als Klemmverschraubung 71 ausgebildet, die gleichzeitig den Führungszapfen 41 bildet und die sich durch die langlochartige Führungsnut 40 der Befestigungskonsole 31 sowie durch die langlochartige Führungsnut 45 der Zwischenkonsole 35 erstreckt und auf der die Lagerbuchse 60 angeordnet ist. Der Führungszapfen 41 ist zur Ausbildung der Klemmverschraubung 71 mit einem entsprechenden Gewinde versehen bzw. als Gewindestift ausgebildet. Die Klemmverschraubung 71 erstreckt sich somit ebenfalls durch die rohrförmigen Hülse 42 der Lagerkonsole 31.

Die Klemmverschraubung 71 umfasst eine Klemmmutter 75, die beispielsweise als Betätigungsknopf ausgebildet ist. Die Klemmmutter 75 ist an einer Außenseite der Befestigungskonsole 31 angeordnet. An der gegenüberliegenden Außenseite der Befestigungskonsole 31 ist eine Klemmplatte 76 angeordnet, die an der Lagerkonsole 30 verdrehgesichert angeordnet ist. Hierzu kann die Klemmplatte 76 mittels einer Nase 77 in eine entsprechende Ausnehmung 78 der Lagerkonsole 30 eingreifen, wie aus der Figur 4 ersichtlich ist. Die Befestigungskonsole 31, die Zwischenkonsole 35 und die Lagerkonsole 30 sind somit zwischen der Klemmmutter 75 und der Klemmplatte 76 angeordnet. Die Klemmmutter 75 wirkt im dargestellten Ausführungsbeispiel über eine Hülse 79 auf die Außenseite der Befestigungskonsole 71. Durch manuelles Anziehen der Klemmmutter 75 können somit die Befestigungskonsole 31, die Zwischenkonsole 35 und die Lagerkonsole 30 gegen die Klemmplatte 76 verspannt und somit die Verstelleinrichtung 20 nach einer Einstellung an die jeweilige Körpergröße der Bedienperson P geklemmt werden bzw. durch manuelles Lösen der Klemmmutter 75 die Verstelleinrichtung 20 zur Verstellung und Einstellung an die jeweilige Körpergröße der Bedienperson P gelöst werden.

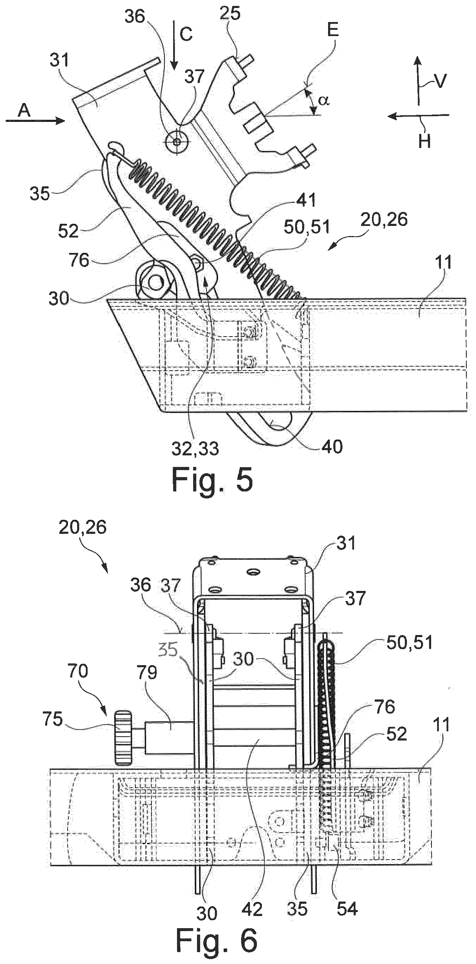

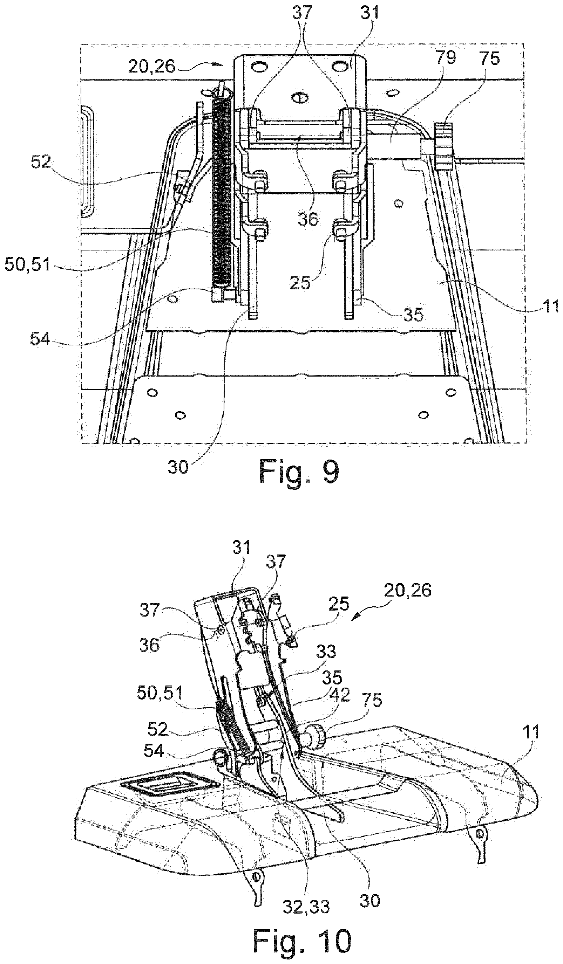

In den Figuren 4-9 befindet sich die Verstelleinrichtung 20 in der unteren vertikalen Endstellung. In den Figuren 10-12 befindet sich die Verstelleinrichtung 20 in der oberen vertikalen Endstellung. Die Verstelleinrichtung 20 weist zwischen der unteren vertikalen Endstellung und der oberen vertikalen Endstellung einen vertikalen Verstellbereich V des Befestigungsflansches 25 nach Oben im Bereich von 100mm bis 125mm, bevorzugt 110 mm, auf. Die Verstelleinrichtung 20 weist zwischen der unteren vertikalen Endstellung und der oberen vertikalen Endstellung einen horizontalen Verstellbereich H des Befestigungsflansches 25 in Längsrichtung des Flurförderzeugs 1 nach Vorne, d.h. in Richtung des Antriebsteils A und somit in Richtung von dem Fahrerarbeitsplatz 7 und somit der Bedienperson P weg, im Bereich von 10mm bis 60mm, bevorzugt 50 mm, auf. Die Verstelleinrichtung 20 weist zwischen der unteren vertikalen Endstellung und der oberen vertikalen Endstellung einen Neigungsverstellbereich des Befestigungsflansches 25 im Bereich von 4° bis 8°, bevorzugt 6° , auf. Die Neigung α einer senkrecht auf dem Befestigungsflansch 25 stehenden gedachten Ebene E zur Horizontalen ist in der unteren Endstellung, wie in der Figur 5 verdeutlicht ist, beispielsweise 34°. Die Neigung α der senkrecht auf dem Befestigungsflansch 25 stehenden gedachten Ebene E zur Horizontalen ist in der oberen Endstellung, wie in der Figur 11 verdeutlicht ist, beispielweise 32°. In einer Zwischenposition zwischen der unteren Endstellung und der oberen Endstellung kann die Neigung α der senkrecht auf dem Befestigungsflansch 25 stehenden gedachten Ebene E zur Horizontalen 38°. Es ergibt sich somit ein Winkel α zwischen 32° und 38° und somit ein Neigungsverstellbereich des Befestigungsflansches 25 von 6°.

Die langlochartige Führungsnut 40 der Befestigungskonsole 31 sowie die langlochartige Führungsnut 45 der Zwischenkonsole 35 weisen - wie aus den Figuren 13 und 14 ersichtlich ist - jeweils einen kreisbogenförmigen Verlauf und somit gekrümmten Verlauf. Der Radius R1 der langlochartige Führungsnut 40 der Befestigungskonsole 31 ist hierbei kleiner als der Radius R2 der langlochartigen Führungsnut 45 der Zwischenkonsole 35 gewählt.

Bei der erfindungsgemäßen Verstelleinrichtung 20 ist somit die Befestigungskonsole 31 fest verbunden mit dem Lenkrad 10 über den Befestigungsflansch 25, gelenkig verbunden über die Achse 36 mit der Zwischenkonsole 35 und über die Führung 32 (langlochartige Führungsnut 40 und Führungszapfen 41) an der Lagerkonsole 30 geführt.

Bei der erfindungsgemäßen Verstelleinrichtung 20 ist somit die Zwischenkonsole 35 gelenkig verbunden über die Achse 36 mit der Befestigungskonsole 31, über die Führung 33 (langlochartige Führungsnut 45 und Führungszapfen 41, 46) an der Lagerkonsole 30 geführt und mit der Federeinrichtung 50 verbunden.

Bei der erfindungsgemäßen Verstelleinrichtung 20 ist somit die Lagerkonsole 30 an dem Antriebsteil A, im vorliegenden Ausführungsbeispiel an dem Deckel 11, befestigt, über die Führung 32 (langlochartige Führungsnut 40 und Führungszapfen 41) mit der Befestigungskonsole 31 verbunden und über die Führung 33 (langlochartige Führungsnut 45 und Führungszapfen 41, 46) mit der Zwischenkonsole 35 verbunden.

Die Federeinrichtung 50 ist mit dem zweiten Ende über den Halter 52 an dem Antriebsteil A, im vorliegenden Ausführungsbeispiel an dem Deckel 11, befestigt.

Die als Betätigungsknopf ausgebildete Klemmmutter 75 dient zum Verklemmen der Verstelleinrichtung 20.

Im dargestellten Ausführungsbeispiel ist die Befestigungskonsole 31 - wie insbesondere in der Figur 13 ersichtlich ist - als U-förmig gebogene Platte mit zwei seitlich beabstandeten Seitenplatten gebildet, in denen jeweils eine langlochartige Führungsnut 40 angeordnet ist. Die Lagerkonsole 30 ist - wie insbesondere in der Figur 19 ersichtlich ist - von zwei seitlich, in Fahrzeugquerrichtung beabstandete vertikalen Platten gebildet, die in Fahrzeuglängsrichtung orientiert am Antriebsteil A, im vorliegenden Ausführungsbeispiel an dem Deckel 11, befestigt sind und über die Hülse 42 versteift sind. Die Zwischenkonsole 35 ist - wie insbesondere in der Figur 14 ersichtlich ist - von zwei seitlich beabstandeten Seitenplatten gebildet, in denen jeweils eine langlochartige Führungsnut 45 angeordnet ist und die über eine plattenartige Querstrebe 80 miteinander verbunden sind.

Die erfindungsgemäße Verstelleinrichtung 20 weist eine Reihe von Vorteilen auf.

Die Verstelleinrichtung 20 weist bei geringem vertikalem Einbauraumbedarf unter dem Deckel 11 und somit bei geringer Dicke des Deckels 11 einen großen vertikalen Verstellbereich des Lenkrades 10 auf.

Es werden gleichzeitig das Lenkrad 10 in vertikaler Richtung V, in horizontaler Richtung H (Abstand zur Bedienperson P) und in der Neigung α verstellt.

Die Klemmeinrichtung 70 kann mit der Klemmmutter 75 schnell und einfach bedient werden.

Die Verstelleinrichtung 20 weist einen robusten und steifen Aufbau ohne Spiel in den Führungen 32, 33 auf.

## Patentansprüche

1. Flurförderzeug (1) mit einem Fahrerarbeitsplatz (7), insbesondere Fahrerstand mit einer Fahrerstandplattform (8), und einem als Lenkrad (10) ausgebildeten Bedienelement, das mittels einer Verstelleinrichtung (20) verstellbar an einem Antriebsteil (A) des Flurförderzeugs (1) angeordnet ist, wobei die Verstelleinrichtung (20) einen Befestigungsflansch (25), an dem das Lenkrad (10) angebaut ist, umfasst und als Zwangskulissenführung (26) ausgebildet ist, die derart ausgeführt ist, dass der Befestigungsflansch (25) bei einer vertikalen Verstellung zwangsweise in horizontaler Richtung verstellt wird und zwangsweise in der Neigung zur Horizontalen verstellt wird, **dadurch gekennzeichnet, dass** der Fahrerarbeitsplatz (7) ein Fahrerarbeitsplatz (7) für eine stehende Bedienperson (P) ist und die Verstelleinrichtung (20) eine Lagerkonsole (30), die an dem Antriebsteil (A) befestigt ist, eine Befestigungskonsole (31), die mit dem Befestigungsflansch (25) versehen ist und die an der Lagerkonsole (30) mittels einer Führung (32) geführt ist, und eine Zwischenkonsole (35) aufweist, die mit der Befestigungskonsole (31) verbunden, insbesondere gelenkig verbunden, ist und die an der Lagerkonsole (30) mittels einer Führung (33) geführt ist.

2. Flurförderzeug nach Anspruch 1, **dadurch gekennzeichnet, dass** die Zwischenkonsole (35) mit der Befestigungskonsole (31) um eine horizontale Achse (36) gelenkig verbunden ist.

3. Flurförderzeug nach Anspruch 1 oder 2, **dadurch gekennzeichnet, dass** die Befestigungskonsole (31) eine langlochartige Führungsnut (40), insbesondere eine kreisbogenförmig gekrümmte Führungsnut, und die Lagerkonsole (30) einen Führungszapfen (41) aufweist, wobei der Führungszapfen (41) in der Führungsnut (40) der Befestigungskonsole (31) angeordnet ist.

4. Flurförderzeug nach einem der Ansprüche 1 bis 3, **dadurch gekennzeichnet, dass** die Zwischenkonsole (35) eine langlochartige Führungsnut (45), insbesondere eine kreisbogenförmig gekrümmte Führungsnut, aufweist und die Lagerkonsole (30) einen weiteren Führungszapfen (46) aufweist, der von dem Führungszapfen (41) in vertikaler Richtung beabstandet ist, wobei der Führungszapfen (41) und der weitere Führungszapfen (46) in der Führungsnut (45) der Zwischenkonsole (35) angeordnet sind.

5. Flurförderzeug nach Anspruch 4, **dadurch gekennzeichnet, dass** der weitere Führungszapfen (46) von dem Führungszapfen (41) in horizontaler Richtung beabstandet ist.

6. Flurförderzeug nach einem der Ansprüche 1 bis 5, **dadurch gekennzeichnet, dass** die Verstelleinrichtung (20) mit einer Federeinrichtung (50) in eine Endstellung beaufschlagt ist, wobei die Federeinrichtung (50) mit einem ersten Ende an dem Antriebsteil (A) befestigt ist und mit einem zweiten Ende an der Zwischenkonsole (35) befestigt ist.

7. Flurförderzeug nach einem der Ansprüche 3 bis 6, **dadurch gekennzeichnet, dass** der Führungszapfen (41) mittels einer Lagerbuchse (60) in der Führungsnut (40) der Befestigungskonsole (31) und in der Führungsnut (45) der Zwischenkonsole (31) angeordnet ist.

8. Flurförderzeug nach einem der Ansprüche 4 bis 7, **dadurch gekennzeichnet, dass** der weitere Führungszapfen (46) mittels einer Lagerbuchse (61) in der Führungsnut (45) der Zwischenkonsole (31) angeordnet ist.

9. Flurförderzeug nach einem der Ansprüche 1 bis 8, **dadurch gekennzeichnet, dass** die Zwischenkonsole (35) zwischen der Lagerkonsole (30) und der Befestigungskonsole (31) angeordnet ist.

10. Flurförderzeug nach einem der Ansprüche 1 bis 9, **dadurch gekennzeichnet, dass** die Verstelleinrichtung (20) eine Klemmeinrichtung (70) aufweist, die eine Klemmung der Befestigungskonsole (31) und der Zwischenkonsole (35) an der Lagerkonsole (30) ermöglicht.

11. Flurförderzeug nach Anspruch 10, **dadurch gekennzeichnet, dass** die Klemmeinrichtung (70) als Klemmverschraubung (71) ausgebildet ist, die den Führungszapfen (41) bildet.

12. Flurförderzeug nach Anspruch 11, **dadurch gekennzeichnet, dass** die Klemmverschraubung (71) eine Klemmmutter (75) und eine an der Lagerkonsole (30) verdrehgesicherte Klemmplatte (76) umfasst, wobei die Befestigungskonsole (31), die Zwischenkonsole (35) und die Lagerkonsole (30) zwischen der Klemmmutter (75) und der Klemmplatte (76) angeordnet sind.

13. Flurförderzeug nach einem der Ansprüche 1 bis 12, **dadurch gekennzeichnet, dass** die Verstelleinrichtung (20) eine vertikalen Verstellbereich im Bereich von 100mm bis 125mm, bevorzugt 110 mm, einen horizontalen Verstellbereich im Bereich von 10mm bis 60mm, bevorzugt 50 mm, und einen Neigungsverstellbereich im Bereich von 4⁰ bis 8⁰ , bevorzugt 6°, aufweist.

## Claims

1. Industrial truck (1) having a driver's workstation (7), in particular a driver's station with a driver's platform (8), and an operating element which is configured as a steering wheel (10) and is arranged on a drive part (A) of the industrial truck (1) so as to be adjustable by means of an adjusting device (20), wherein the adjusting device (20) comprises a fastening flange (25), on which the steering wheel (10) is mounted, and is configured as a constrained slotted guide (26) which is embodied such that, in the event of a vertical adjustment, the fastening flange (25) is inevitably adjusted in the horizontal direction and is inevitably adjusted in terms of inclination to the horizontal, **characterized in that** the driver's workstation (7) is a driver's workstation (7) for a standing operator (P) and the adjusting device (20) has a bearing bracket (30), which is fastened to the drive part (A), a fastening bracket (31), which is provided with the fastening flange (25) and is guided on the bearing bracket (30) by means of a guide (32), and an intermediate bracket (35), which is connected to the fastening bracket (31), in particular in an articulated manner, and is guided on the bearing bracket (30) by means of a guide (33).

2. Industrial truck according to Claim 1, **characterized in that** the intermediate bracket (35) is connected to the fastening bracket (31) in an articulated manner about a horizontal axis (36).

3. Industrial truck according to Claim 1 or 2, **characterized in that** the fastening bracket (31) has a guide slot (40) in the form of an oblong hole, in particular a guide slot curved in an arcuate manner, and the bearing bracket (30) has a guide pin (41), wherein the guide pin (41) is arranged in the guide slot (40) of the fastening bracket (31).

4. Industrial truck according to one of Claims 1 to 3, **characterized in that** the intermediate bracket (35) has a guide slot (45) in the form of an oblong hole, in particular a guide slot curved in an arcuate manner, and the bearing bracket (30) has a further guide pin (46) which is spaced apart from the guide pin (41) in a vertical direction, wherein the guide pin (41) and the further guide pin (46) are arranged in the guide slot (45) of the intermediate bracket (35).

5. Industrial truck according to Claim 4, **characterized in that** the further guide pin (46) is spaced apart from the guide pin (41) in a horizontal direction.

6. Industrial truck according to one of Claims 1 to 5, **characterized in that** the adjusting device (20) is urged into an end position by a spring device (50), wherein the spring device (50) is fastened to the drive part (A) by a first end and is fastened to the intermediate bracket (35) by a second end.

7. Industrial truck according to one of Claims 3 to 6, **characterized in that** the guide pin (41) is arranged in the guide slot (40) of the fastening bracket (31) and in the guide slot (45) of the intermediate bracket (31) by means of a bearing bush (60).

8. Industrial truck according to one of Claims 4 to 7, **characterized in that** the further guide pin (46) is arranged in the guide slot (45) of the intermediate bracket (31) by means of a bearing bush (61).

9. Industrial truck according to one of Claims 1 to 8, **characterized in that** the intermediate bracket (35) is arranged between the bearing bracket (30) and the fastening bracket (31).

10. Industrial truck according to one of Claims 1 to 9, **characterized in that** the adjusting device (20) has a clamping device (70) which allows the fastening bracket (31) and the intermediate bracket (35) to be clamped to the bearing bracket (30).

11. Industrial truck according to Claim 10, **characterized in that** the clamping device (70) is configured as a clamping screw connection (71) which forms the guide pin (41).

12. Industrial truck according to Claim 11, **characterized in that** the clamping screw connection (71) comprises a clamping nut (75) and a clamping plate (76) secured against twisting on the bearing bracket (30), wherein the fastening bracket (31), the intermediate bracket (35) and the bearing bracket (30) are arranged between the clamping nut (75) and the clamping plate (76) .

13. Industrial truck according to one of Claims 1 to 12, **characterized in that** the adjusting device (20) has a vertical adjustment range in the range from 100 mm to 125 mm, preferably 110 mm, a horizontal adjustment range in the range from 10 mm to 60 mm, preferably 50 mm, and an inclination adjustment range in the range from 4° to 8°, preferably 6°.

## Revendications

1. Chariot de manutention (1) avec un poste de travail du conducteur (7), en particulier un poste de conduite avec une plate-forme de poste de conduite (8), et un élément de commande réalisé sous forme de volant de direction (10), qui est agencé de manière réglable sur une partie d'entraînement (A) du chariot de manutention (1) au moyen d'un dispositif de réglage (20), le dispositif de réglage (20) comprenant une bride de fixation (25), sur laquelle le volant de direction (10) est monté, et étant réalisé sous forme de guide à coulisse forcé (26) qui est conçu de telle sorte que lors d'un réglage vertical la bride de fixation (25) est déplacée de manière forcée dans la direction horizontale et est déplacée de manière forcée dans l'inclinaison par rapport à l'horizontale, **caractérisé en ce que** le poste de travail du conducteur (7) est un poste de travail du conducteur (7) pour un opérateur debout (P) et le dispositif de réglage (20) présente une console de support (30) qui est fixée à la partie d'entraînement (A), une console de fixation (31) qui est munie de la bride de fixation (25) et qui est guidée sur la console de support (30) au moyen d'un guide (32), et une console intermédiaire (35) qui est reliée, en particulier reliée de manière articulée, à la console de fixation (31) et qui est guidée sur la console de support (30) au moyen d'un guide (33).

2. Chariot de manutention selon la revendication 1, **caractérisé en ce que** la console intermédiaire (35) est reliée de manière articulée autour d'un axe horizontal (36) à la console de fixation (31).

3. Chariot de manutention selon la revendication 1 ou 2, **caractérisé en ce que** la console de fixation (31) présente une rainure de guidage (40) en forme de trou oblong, en particulier une rainure de guidage incurvée en forme d'arc de cercle, et la console de support (30) présente un tenon de guidage (41), le tenon de guidage (41) étant agencé dans la rainure de guidage (40) de la console de fixation (31).

4. Chariot de manutention selon l'une quelconque des revendications 1 à 3, **caractérisé en ce que** la console intermédiaire (35) présente une rainure de guidage (45) en forme de trou oblong, en particulier une rainure de guidage incurvée en forme d'arc de cercle, et la console de support (30) présente un autre tenon de guidage (46), qui est espacé du tenon de guidage (41) dans la direction verticale, le tenon de guidage (41) et l'autre tenon de guidage (46) étant agencés dans la rainure de guidage (45) de la console intermédiaire (35).

5. Chariot de manutention selon la revendication 4, **caractérisé en ce que** l'autre tenon de guidage (46) est espacé du tenon de guidage (41) dans la direction horizontale.

6. Chariot de manutention selon l'une quelconque des revendications 1 à 5, **caractérisé en ce que** le dispositif de réglage (20) est sollicité par un dispositif à ressort (50) dans une position finale, le dispositif à ressort (50) étant fixé par une première extrémité à la partie d'entraînement (A) et par une deuxième extrémité à la console intermédiaire (35).

7. Chariot de manutention selon l'une quelconque des revendications 3 à 6, **caractérisé en ce que** le tenon de guidage (41) est agencé dans la rainure de guidage (40) de la console de fixation (31) et dans la rainure de guidage (45) de la console intermédiaire (31) au moyen d'un coussinet (60).

8. Chariot de manutention selon l'une quelconque des revendications 4 à 7, **caractérisé en ce que** l'autre tenon de guidage (46) est agencé dans la rainure de guidage (45) de la console intermédiaire (31) au moyen d'un coussinet (61).

9. Chariot de manutention selon l'une quelconque des revendications 1 à 8, **caractérisé en ce que** la console intermédiaire (35) est agencée entre la console de support (30) et la console de fixation (31).

10. Chariot de manutention selon l'une quelconque des revendications 1 à 9, **caractérisé en ce que** le dispositif de réglage (20) présente un dispositif de serrage (70) qui permet de serrer la console de fixation (31) et la console intermédiaire (35) sur la console de support (30) .

11. Chariot de manutention selon la revendication 10, **caractérisé en ce que** le dispositif de serrage (70) est réalisé sous forme de raccord vissé avec serrage (71) qui forme le tenon de guidage (41).

12. Chariot de manutention selon la revendication 11, **caractérisé en ce que** le raccord vissé avec serrage (71) comprend un écrou de serrage (75) et une plaque de serrage (76) bloquée en rotation sur la console de support (30), la console de fixation (31), la console intermédiaire (35) et la console de support (30) étant agencées entre l'écrou de serrage (75) et la plaque de serrage (76).

13. Chariot de manutention selon l'une quelconque des revendications 1 à 12, **caractérisé en ce que** le dispositif de réglage (20) présente une plage de réglage vertical dans la plage allant de 100 mm à 125 mm, de préférence 110 mm, une plage de réglage horizontal dans la plage de allant de 10 mm à 60 mm, de préférence 50 mm, et une plage de réglage d'inclinaison dans la plage de 4° à 8°, de préférence 6°.
